# FASCICULE DE BREVET EUROPEEN

(11) **EP 3 931 739 B1**
(45) Date de publication et mention de la délivrance du brevet: **18.01.2023**
(21) Numéro de dépôt: 20709286.7
(22) Date de dépôt: 11.02.2020
(51) Int. Cl.: G06K 7/00, G06K 7/10, H01Q 3/00

(54) **SYSTÈME DE DÉTECTION DE RÉCEPTEURS**
SYSTEM ZUR DETEKTION VON EMPFÄNGERN
SYSTEM FOR DETECTING RECEIVERS

(30) Priorité: 27.02.2019 FR 1902033
(43) Date de publication de la demande: 05.01.2022
(73) Titulaire: Greenerwave, 06560 Valbonne (FR); CENTRE NATIONAL DE LA RECHERCHE SCIENTIFIQUE (CNRS), 75016 Paris (FR); Ecole Supérieure de Physique et de Chimie Industrielles de la Ville de Paris, 75005 Paris (FR)
(72) Inventeur: LEROSEY, Geoffroy, 75010 PARIS (FR)
(74) Mandataire: Plasseraud IP
(86) Numéro de dépôt international: PCT/FR2020/050250
(87) Numéro de publication internationale: WO 2020/174151

(56) Documents cités:
- EP-A1- 2 314 961
- FR-A1- 3 010 836
- US-A1- 2012 176 227

## Description

### DOMAINE TECHNIQUE

La présente invention est relative à un système de détection de récepteurs.

### ETAT DE LA TECHNIQUE ANTERIEURE

Plus particulièrement, l'invention concerne un système de détection comprenant :
- au moins un récepteur,
- un contenant ayant un volume, le contenant étant adapté pour contenir dans son volume le récepteur,
- une antenne adaptée pour émettre une onde primaire dans le volume, et pour recevoir une onde secondaire émise par le récepteur dans le volume en réponse de la réception de l'onde primaire,
- un contrôleur relié à l'antenne, le contrôleur étant adapté pour commander l'émission de l'onde primaire et pour détecter le récepteur par l'onde secondaire reçue.

Des exemples de systèmes de ce type sont connus, tel que des systèmes de caisses de magasin, les récepteurs étant des étiquettes de technologie RFID placées sur des articles. Au passage en caisse, les articles sont placés dans le volume du contenant et le système identifie les articles et établi la facture. Ce type de système est aussi connu de EP 2 314 961 A1.

### EXPOSE DE L'INVENTION

La présente invention a pour but de perfectionner un système de détection de ce type, notamment pour améliorer la détection du ou des récepteurs dans le volume.

A cet effet, un système de détection du type précité est **caractérisé en ce q**u'il comprend en outre des éléments réglables ayant une impédance qui peut être modifiée pour modifier la manière dont l'onde primaire est réfléchie et/ou transmise par l'élément réglable, les éléments réglables étant en nombre N supérieur ou égal à deux, et dans lequel :
- les éléments réglables sont pilotés par une onde de contrôle émise par le contrôleur,
- les éléments réglables sont fixés au contenant en une pluralité de positions différentes,
- des éléments réglables comprennent un dispositif de récupération d'énergie de l'onde primaire et/ou de l'onde de contrôle pour les alimenter en énergie, et
- chaque élément réglable comprend un dispositif de réception de l'onde de contrôle qui décode un paramètre de réglage contenu l'onde de contrôle, ledit paramètre de réglage étant destiné à l'élément réglable pour que l'élément réglable pilote son impédance.

Grâce à ces dispositions, le système est apte à modifier l'impédance de chaque élément réglable grâce l'onde secondaire reçue par le contrôleur en provenance du ou des récepteurs. Il est ainsi capable d'optimiser sa réception de l'onde secondaire en modifiant ces impédances.

Le système est alors capable de détecter de manière plus efficace la présence d'un ou de plusieurs récepteurs à l'intérieur du volume du contenant, quelle que soit la position desdits récepteurs dans ce volume du contenant.

En outre, le système est simple à mettre en œuvre car les éléments réglables sont fixés à un contenant, car ils sont autonomes en énergie, et car ils n'ont pas besoin d'être connecté de manière filaire au contrôleur.

Il est alors aisé de rendre tout contenant adapté à détecter des récepteurs à l'intérieur de son volume, même pour un contenant qui peut être déplacé dans l'environnement.

Enfin, les éléments réglables sont des éléments de taille réduite, de conception très simple, et pouvant être produits en quantité à faible coût.

Dans divers modes de réalisation du système selon l'invention, on peut éventuellement avoir recours en outre à l'une et/ou à l'autre des dispositions suivantes.

Selon un aspect, le nombre N d'éléments réglables est supérieur à cinq.

Selon un aspect, le contrôleur détermine un paramètre de réglage adapté pour chaque élément réglable et transmet chaque paramètre de réglage à destination d'un élément réglable dans l'onde de contrôle.

Selon un aspect, chaque élément réglable comprend une mémoire d'élément réglable qui mémorise un identifiant d'élément réglable, les identifiants d'éléments réglables étant différents pour tous les éléments réglables.

Selon un aspect:
- le contrôleur transmet une information d'identification avec le paramètre de réglage à destination d'un élément réglable, ladite information d'identification désignant l'élément réglable du système à qui est destiné le paramètre de réglage, et
- le dispositif de réception de l'élément réglable décode l'information d'identification et le paramètre de réglage contenus dans l'onde de contrôle, et l'élément réglable pilote son impédance par rapport au paramètre de réglage si l'information d'identification est égale à son identifiant d'élément réglable.

Selon un aspect, chaque élément réglable en présence de l'onde primaire émet périodiquement par une onde de contrôle son identifiant d'élément réglable pour que le contrôleur établisse une liste des éléments réglables présents.

Selon un aspect, chaque élément réglable comprend en outre un organe de stockage de l'énergie récupérée par le dispositif de récupération d'énergie.

Selon un aspect, le système comprend en outre un élément non réglable ayant une impédance déterminée pour modifier la manière dont l'onde primaire est réfléchie et/ou absorbée par ledit élément non réglable.

Selon un aspect, les éléments réglables sont des dispositifs de forme plane, avec une portion de circuit directement imprimée sur un support plan.

Selon un aspect, chaque récepteur comprend une mémoire de récepteur qui mémorise un identifiant de récepteur, les identifiants de récepteur étant différents pour tous les récepteurs, et chaque récepteur émet par l'onde secondaire ledit identifiant de récepteur.

Selon un aspect, le récepteur est un dispositif de technologie RFID, l'antenne étant alors une antenne de détection adaptée à ce type de récepteur.

Selon un aspect, l'onde de contrôle est l'onde primaire.

Selon un aspect, le contrôleur et l'antenne sont constitués d'au moins deux sous-systèmes :
- un premier sous-système comprenant un contrôleur de récepteur et une antenne de récepteur, l'antenne de récepteur étant adaptée pour au moins émettre l'onde primaire et recevoir l'onde secondaire,
- un deuxième sous-système comprenant un contrôleur d'éléments réglables et une antenne d'élément réglable, l'antenne d'élément réglable étant adaptée pour émettre et recevoir une onde de contrôle.

Selon un aspect, le contrôleur comprend un tableau de coordonnées correspondant aux positions spatiales d'au moins une partie des éléments réglables par rapport à un repère de référence.

Selon un aspect, le contrôleur détermine la position de chaque récepteur à partir de la réception de chaque onde secondaire, des paramètres de réglage des éléments réglables et des positions spatiales des éléments réglables enregistrées dans le tableau de coordonnées.

Selon un aspect, le contenant comprend une ouverture adaptée pour introduire et/ou extraire un récepteur du volume dudit contenant, l'ouverture pouvant éventuellement être refermée par une porte mobile.

Selon un aspect, le contenant est compris dans une liste de contenant comprenant un mobilier, un récipient de caisse enregistreuse, un sac, un véhicule automobile, un avion, un train, un local.

Selon un aspect, chaque élément réglable comprend :
- une première antenne adaptée pour recevoir l'onde primaire et pour fournir un signal au dispositif de récupération d'énergie et au dispositif de réception, ladite première antenne ayant une impédance qui peut être modifiée pour modifier la manière dont l'onde primaire est réfléchie et/ou transmise,
- un circuit électronique alimenté par le dispositif de récupération d'énergie, et qui pilote l'impédance de la première antenne.

Selon un aspect, chaque élément réglable comprend :
- une première antenne adaptée pour recevoir l'onde primaire et pour fournir un signal au dispositif de récupération d'énergie et au dispositif de réception,
- une seconde antenne ayant une impédance qui peut être modifiée pour modifier la manière dont l'onde primaire est réfléchie et/ou transmise,
- un circuit électronique alimenté par le dispositif de récupération d'énergie, et qui pilote l'impédance de la seconde antenne.

### BREVE DESCRIPTION DES DESSINS

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 est un schéma général d'un mode de réalisation du système de détection de récepteurs selon l'invention ;
- la figure 2 montre un groupe d'élément réglable utilisable dans le système de la figure 1 ;

- la figure 3 est une première variante d'un élément réglable du système de la figure 1 ; et
- la figure 4 est une seconde variante d'un élément réglable du système de la figure 1.

Sur les différentes figures, les mêmes références numériques désignent des éléments identiques ou similaires.

### DESCRIPTION DETAILLEE

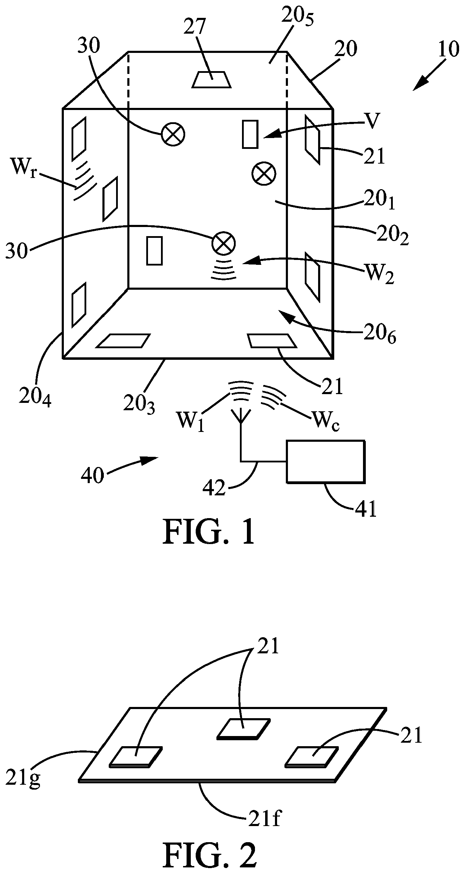

La **figure 1** est une vue schématique en perspective d'un mode de réalisation d'un système de détection de récepteurs 10, désigné ci-après de système 10. Dans cet exemple, le système 10 comprend un contenant 20 ayant un volume V, le contenant étant adapté pour contenir dans son volume des récepteurs 30. Ces récepteurs 30 sont par exemple des dispositifs mobiles que le système va chercher à détecter et/ou à identifier. En soit une identification ou une communication correspond également à une détection. Ainsi, le système selon l'invention est un système de détection de récepteur et/ou d'identification de récepteur et/ou de communication avec un récepteur. Ainsi, un tel système 10 est adapter à détecte la présence d'un récepteur 30 dans le volume du contenant 20, i.e. identifier le récepteur 30 dans le volume du contenant 20, i.e. communiquer avec le récepteur 30 contenu dans le contenant 20.

Dans le cas particulier de cette figure, le contenant 20 est un parallélépipède comprenant une face de fond 20₁, et quatre faces latérales 20₂, 20₃, 20₄, 20₅ et une face d'ouverture 20₆ en opposition de la face de fond 20₁. Ce contenant 20 forme ainsi un contenant 20 dans le volume V duquel des récepteurs 30 peuvent être introduits et/ou être extraits du volume à travers la face d'ouverture 20₆. Ces récepteurs 30 peuvent également être déplacés dans le volume V. La figure montre trois récepteurs 30 dans le volume V du contenant 20.

Le système 10 comprend en outre :
- une antenne 42 adaptée pour émettre une onde primaire W₁ dans le volume V, et adaptée pour recevoir une onde secondaire W₂ émise par chaque récepteur 30 positionné dans le volume V en réponse de la réception par ce récepteur de l'onde primaire W₁, et
- un contrôleur 41 relié à l'antenne 42, le contrôleur étant adapté pour commander l'émission de l'onde primaire W₁ et pour identifier le récepteur 30 par l'onde secondaire W₂ reçue par l'antenne 42.

Notamment, pour identifier le ou les récepteurs 30 dans le volume du contenant, **le système 10 selon l'invention** comprend en outre des éléments réglables 21 ayant une impédance qui peut être modifiée pour modifier la manière dont l'onde primaire W₁ est réfléchie et/ou transmise par chaque élément réglable 21.

Les éléments réglables 21 sont en un nombre N supérieur ou égal à deux, et de préférence en un nombre N supérieur à cinq. De cette manière, la répartition de l'onde primaire W₁ dans le volume du contenant 20 peut être modifiée. Eventuellement, le nombre N est supérieur à dix ou vingt pour modifier encore plus la répartition de l'onde primaire W1 dans le volume du contenant 20.

Le contrôleur 41 émet une onde de contrôle W_{C} pour contrôler ou piloter les éléments réglables 21. Une description du fonctionnement et de deux modes de réalisations du contrôleur 41 sera détaillée plus loin. Optionnellement, l'onde de contrôle W_{C} est en fait l'onde primaire W₁. Ainsi, le contrôleur 41 contrôle ou pilote de manière sans fil les éléments réglables du système 10.

En outre, chaque élément réglable 21 comprend un dispositif de réception 24 de l'onde de contrôle W_{C} qui décode un paramètre de réglage contenu dans cette onde de contrôle, en provenance du contrôleur et à destination d'un ou des éléments réglables. L'élément réglable 21 utilise alors le paramètre de réglage pour piloter et modifier son impédance.

L'onde de contrôle W_{C} peut être dans une bande de fréquence identique ou différente de l'onde primaire W₁. Avantageusement, ces ondes sont à une fréquence différente, et les transmission sont indépendantes.

En outre, les éléments réglables 21 sont fixés au contenant 20 en une pluralité de positions différentes. De cette manière, on peut modifier encore plus la répartition de l'onde primaire W₁ dans le volume du contenant 20. Les positions des éléments réglables 21 sur le contenant 20 peuvent être optimisées pour couvrir au mieux le volume V du contenant 20 avec un nombre minimum d'éléments réglables. Cette optimisation peut être effectuée par simulation et/ou expérience du volume V. Une marge peut être ajoutée au nombre de d'éléments réglables 21 pour augmenter la robustesse d'identification du système.

En outre, des éléments réglables 21 du système comprennent cun dispositif de récupération d'énergie 23 de l'onde primaire W₁ et/ou de l'onde de contrôle W_{C} pour alimenter ledit élément réglable 21. L'élément réglable utilise cette énergie pour son fonctionnement, et notamment pour faire fonctionner son dispositif de réception 24 qui décode le paramètre de réglage pour modifier son impédance afin de modifier la manière dont l'onde primaire est réfléchie et/ou transmise par ledit élément réglable 21.

Ainsi, l'élément réglable 21 est autonome en énergie et également autonome pour l'adaptation de son impédance. L'élément réglable 21 n'a pas besoin de connexion filaire avec un module de commande général, et il n'a pas besoin de connexion filaire avec le contrôleur 41 de ce système de détection 10 de récepteurs.

Avantageusement, tous les éléments réglables 21 du système 10 ont chacun (individuellement) leur dispositif de récupération d'énergie et sont ainsi indépendants. Eventuellement, un ou plusieurs éléments réglables 21 sont connectés en filaire à une alimentation, mais au moins un élément réglable 21 et de préférence plusieurs (au moins deux) éléments réglables 21 ont un dispositif de récupération d'énergie.

Eventuellement, deux éléments réglables 21 partagent un seul dispositif de récupération d'énergie, ou un groupe d'éléments réglables partagent un seul dispositif de récupération d'énergie, le groupe comprenant deux, trois, quatre ou plus d'éléments réglables 21.

Grâce à ces dispositions, les éléments réglables 21 ou des groupes d'éléments réglables peuvent être fixés n'importe où sur le contenant 20 sans avoir de contrainte de câblage (à l'intérieur ou à l'extérieur de ce contenant ou sur toute surface du contenant). Cela donne une grande liberté pour placer les éléments réglables 21 au mieux pour maximiser les possibilités de détection et d'identification de tous les récepteurs 30 dans le volume V du contenant 20. Cela permet également d'équiper un contenant 20 très rapidement puisqu'il suffit seulement de fixer les éléments réglables 21 sur le contenant 20 et de positionner l'antenne 42 à proximité du contenant 20.

Les éléments réglables 21 peuvent être fixés au contenant 20 par tout moyen de fixation. Par exemple, les éléments réglables 21 sont fixés au contenant 20 par un adhésif ou par un clip élastique de fixation ou par une vis ou par un rivet ou par emboitement ou par emmanchement.

En outre, les éléments réglables 21 ont avantageusement une forme plane. Une portion de leur circuit électrique est par exemple directement imprimée sur un support. Le support est par exemple en papier ou en carton ou en plastique ou en tissu, et par exemple avec une face comprenant un adhésif. Eventuellement, la portion du circuit électrique comprend une antenne. Les éléments réglables 21 peuvent également présenter une flexibilité ce qui permet de les plier selon un rayon de courbure qui permet de les fixer sur des surfaces non planes. Grâce à ces dispositions, les éléments réglables 21 peuvent être facilement fixés sur un grand nombre de surfaces (plane ou non plane) d'un contenant, ce qui permet de les positionner à des emplacements adaptés pour contrôler le champ électromagnétique à l'intérieur du contenant 20.

**Le système 10 selon l'invention** peut comprendre en outre des éléments non réglables 27 ayant une impédance prédéterminée et fixe, cette impédance étant adaptée pour modifier la manière dont l'onde primaire W1 est réfléchie et/ou absorbée par ledit élément non réglable 27.

Ce ou ces éléments non réglables 27 sont fixés au contenant 20 à des positions différentes. Ces éléments non réglables 27 permettent de modifier de manière non pilotable la répartition de l'onde primaire W1 est répartie dans le volume V du contenant 20. Cependant ces éléments non réglables 27 peuvent rendre plus efficace les modifications possibles des éléments réglables 21.

Par exemple, ces éléments non réglables 27 sont des éléments résonants dans la bande de fréquence de l'onde primaire.

Par exemple, un élément non réglable 27 peut effectuer une réflexion de l'onde primaire et/ou une absorption de l'onde primaire. Cet élément non réglable peut permettre de confiner l'onde primaire dans le volume V du contenant 20 pour optimiser l'efficacité des éléments réglables 21.

Les positions des éléments non réglables 27 sur le contenant 20 peuvent être optimisées pour que l'onde primaire couvre au mieux le volume V du contenant 20 avec un nombre minimum d'éléments réglables. Cette optimisation peut être effectuée par simulation et/ou expérience du volume V.

Comme représenté en **figure 2** et selon un mode de réalisation, plusieurs éléments réglables 21 et/ ou éléments non réglables 27 sont éventuellement regroupés en un groupe d'éléments 21g sur un support intermédiaire 21s qui est alors adapté à être fixé au contenant 20, selon tout moyen de fixation et par exemple selon un des moyens listés ci-dessus. Par exemple, le support intermédiaire 21s du groupe d'éléments 21g est adapté pour être fixé au contenant 20 par un adhésif déposé sur une face 21f dudit support intermédiaire.

Le support intermédiaire 21s est par exemple une feuille ou une bande, de faible épaisseur, e.g. d'épaisseur inférieure à 0,2 mmm. Ce support intermédiaire 21s est par exemple constitué d'un matériau polymère souple, sur lequel sont fixés les éléments réglables 21 et/ éléments non réglables 27, par exemple par tout procédé tel que l'adhésion. Les éléments réglables 21 sont eux même des circuits de faible épaisseur, de sorte que le groupe d'élément 21g est un dispositif de faible épaisseur et souple qui est facile à fixer sur un contenant 20.

Le groupe d'éléments 21g comprend par exemple une nombre M d'éléments réglables fixés sur le support intermédiaire. Le nombre M d'éléments réglables du groupe d'éléments réglables 21g est par exemple égal à deux, trois ou quatre. Le nombre M d'éléments réglables 21 du groupe d'éléments réglables 21g est de préférence inférieur à cinq.

Les éléments réglables 21 et/ou les éléments non réglables 27 du groupe d'éléments 21g peuvent être répartis de manière régulière selon une direction principale du support intermédiaire ou peuvent être répartis de manière quelconque sur ledit support intermédiaire. De préférence, la distance entre deux éléments réglables du support sera choisie avec des critères de conception relatifs à des caractéristiques de l'onde primaire W₁, et notamment sa fréquence ou bande de fréquence.

Par exemple, les éléments réglables 21 du groupe d'éléments 21g restent indépendants les uns des autres. Ils ne sont pas connectés entre eux par connexion filaire pour partager un unique dispositif de récupération d'énergie ou pour partager un ou des circuits de pilotage de leur impédance. De cette manière, les éléments réglables 21 et/ou éléments non réglables 27 inclus dans le groupe sont tous identiques et facilement réalisables. Cette standardisation donne une grande modularité à la réalisation de chaque élément réglable 21 et à chaque produit de groupe d'éléments 21g. Des feuilles ou bandes d'éléments réglables peuvent être fabriqués en grande quantité et à faible coût.

Par éléments réglables 21, on comprend tout type d'éléments réglables adapté pour modifier la manière dont une onde est réfléchie et/ou transmisse par lesdits éléments réglables 21.

Selon un premier exemple, le document de brevet n° US 6 538 621 montre un exemple de surface électromagnétique dont l'impédance est adaptable ou modifiable. Cette surface électromagnétique comprend une pluralité d'éléments résonateurs, chaque élément résonateur étant réglable. La surface électromagnétique de ce document comprend des éléments plaques situés à distance d'un plan de masse, les éléments plaques voisins étant connectés entres eux par une capacité variable, chaque capacité variable pouvant être pilotée par un potentiel de commande. L'impédance de la surface électromagnétique est ainsi modifiée, par exemple pour focaliser l'onde réfléchie ou pour donner une direction spatiale à l'onde réfléchie 42. Eventuellement, la surface électromagnétique est constituée d'une pluralité de cellules, chaque cellule comprenant deux éléments résonateurs différents.

Selon un second exemple, le document de brevet n° WO 2015/039769 cite et montre d'autres types d'éléments résonateurs pouvant être utilisés dans une surface électromagnétique à impédance adaptable :
- une diode variable peut remplacer la capacité variable,
- les éléments résonateurs peuvent être d'un seul type de polarisation ou de deux types de polarisation, éventuellement répartis de manière alternée sur la surface,
- les éléments résonateurs ont une ou plusieurs fréquences de résonnance pour contrôler une bande de fréquence prédéterminée,
- les éléments résonateurs sont des éléments binaires à deux états, par exemple définis par un changement de phase ou d'amplitude de l'onde modifiée.

Les deux documents cités ci-dessus diffèrent de la présente invention au moins en ce que les éléments réglables sont connectés par fil ou câble à un contrôleur central, et en ce qu'ils ne comprennent pas de dispositif de récupération d'énergie. En outre, ils ne sont pas fixés à un contenant, puisque ces systèmes servent d'antenne de communication en champs libre. Dans la présente invention, les éléments réglables 21 sont au contraire contrôlés par une liaison sans fil, par une onde de contrôle. Ils sont indépendants en énergie et en connexion.

De nombreuses variantes d'éléments résonateurs connus peuvent être utilisées pour former des éléments réglables d'une surface électromagnétique à impédance adaptable.

Avantageusement, l'impédance des éléments résonateurs peuvent être modifiées par un circuit intégré, ce circuit intégré comprenant le dispositif de récupération d'énergie et ce circuit intégré étant apte à directement modifier l'impédance réglable de l'élément réglable. Par exemple, un badge RFID a ce type d'architecture.

L'état des éléments réglables 21 du système 10 est définit par les paramètres de réglage déterminés par le contrôleur 41, i.e. un jeu de paramètres.

Le contrôleur 41 pilote par exemple tous les éléments réglables 21 (par exemple, capacité ou diode variables) ce qui permet de modifier l'impédance de chacun d'eux. Cette modification est bien plus complexe qu'une focalisation ou une directivité spatiale. Elle modifie la répartition spatiale de l'onde primaire W₁ dans le volume V du contenant 20.

Selon un premier mode de réalisation du contrôleur 41, le contrôleur 41 surveille également l'onde secondaire W₂ reçue par l'antenne 42 : par exemple, il détermine des informations de réception concernant la réception de l'onde par son antenne 42, ces informations de réception étant par exemple le niveau de réception et/ou la qualité de réception.

Le contrôleur 41 peut alors utiliser les informations de réception pour estimer une valeur à optimiser, cette valeur étant une des informations ou une combinaison de ces informations de réception.

Le contrôleur 41 exécute par exemple un algorithme d'optimisation sur la base du jeu de paramètres précédents (temporellement), des valeurs estimées précédentes et de la valeur estimée actuelle.

L'algorithme d'optimisation peut être une maximisation ou une minimisation de la valeur estimée, selon la grandeur représentée par cette valeur. En une ou plusieurs étapes successives, l'algorithme d'optimisation permet d'obtenir un jeu de paramètres optimal. A chaque étape ou avec des périodicités prédéterminées, e contrôleur 41 applique le nouveau jeu de paramètres aux éléments réglables 21 et/ou détermine des informations de réceptions pour effectuer l'itération suivante. Ces itérations peuvent être effectuées à une cadence très élevée de sorte que la durée de cette optimisation est très faible au regard du nombre de récepteurs à détecter et/ou identifier dans le volume.

Le jeu de paramètres optimal permet par exemple d'améliorer le niveau de réception de l'onde secondaire W₂ sur l'antenne 42. Grâce à cette modification par l'état optimisé des éléments réglables 21 (modification de l'impédance électromagnétique des éléments réglables 21), le champ de propagation de l'onde secondaire W₂ est amélioré vers l'antenne 42, et la détection et/ou identification de chaque récepteur dans le volume est améliorée.

Ainsi, le contrôleur 41 détermine le jeu de paramètres pour le réglage de la pluralité d'éléments réglables 21 par exemple pour optimiser la réception de l'onde secondaire W₂ par l'antenne 42. L'optimisation porte sur la valeur estimée qui est par exemple une estimation du niveau de réception et/ou de la qualité de réception de l'onde secondaire W₂ par l'antenne 42.

Selon une variante, le contrôleur 41 comprend une mémoire qui enregistre un ou plusieurs jeux de paramètres optimaux pour détecter des récepteurs. De cette manière, l'algorithme d'optimisation peut démarrer son processus à partir de l'un ou de plusieurs des jeux de paramètres enregistrés ce qui permet de gagner du temps sur l'optimisation et d'éviter des effets transitoires.

Selon une variante, l'algorithme d'optimisation surveille sa performance et arrête ses itérations d'optimisation lorsqu'un critère d'arrêt est atteint. On peut éviter ainsi des variations ou fluctuations non significatives de la réception de l'onde secondaire W₂.

Selon un deuxième mode de réalisation du contrôleur 41, le contrôleur 41 définit périodiquement des paramètres de réglages pour les éléments réglables 21 de manière aléatoire pour balayer un ensemble de combinaison des paramètres de réglages, ce qui permet de balayer le volume V du contenant. A chaque réglage des éléments réglables, le contrôleur 41 émet alors aussi une onde primaire W₁ pour détecter des récepteurs 30 avec ce nouveau réglage. Cette procédure lui permet de détecter de nouveau récepteur 30 dans le volume. Après un nombre prédéfinit de combinaisons, cette procédure permet de connaitre l'ensemble des récepteurs 30 du volume V.

Selon un troisième mode de réalisation du contrôleur 41, le contrôleur 41 définit périodiquement des paramètres de réglages pour les éléments réglables 21 selon une table pré-enregistrée pour balayer un ensemble de combinaison des paramètres de réglages.

Cette table pré-enregistrée est par exemple définie par connaissance de la propagation des ondes primaires W₁ dans le volume V soit par simulation, soit par mesure du milieu du volume V. La table pré-enregistrée est par exemple définie pour s'assurer de pouvoir balayer l'intégralité du volume V avec un précision spatiale prédéterminée.

Ensuite, le contrôleur procède comme précédemment : A chaque réglage des éléments réglables, le contrôleur 41 émet alors aussi une onde primaire W₁ pour détecter des récepteurs 30 avec ce nouveau réglage. Cette procédure lui permet de détecter de nouveau récepteur 30 dans le volume. Après un nombre prédéfinit de combinaisons, cette procédure permet de connaitre l'ensemble des récepteurs 30 du volume V.

Selon une variante, le contrôleur 41 effectue périodiquement, par exemple durant une plage temporelle prédéterminée (une plage horaire et/ou une journée déterminée durant une semaine et/ou durant un mois), une calibration de ladite table pré-enregistrée en recherchant les paramètres de réglage optimum pour des éléments réglables de référence.

Cette autre optimisation peut être basée sur l'onde de retour Wᵣ reçue par le contrôleur 41. De manière similaire aux récepteurs 30, le contrôleur 41 détermine des informations de réception concernant la réception de l'onde de retour par son antenne (niveau de réception et/ou qualité de réception). Le contrôleur 41 effectue alors une optimisation de l'ensemble des paramètres de réglage pour un ou plieurs éléments de réglable de référence parmi l'ensemble des éléments réglables 21.

Suite à ces optimisations des paramètres de réglages pour des éléments réglables de référence, le contrôleur 41 en déduit la table pré-enregistrée par diverses techniques, telle qu'une un modèle de paramétrage et/ou une technique d'interpolation.

Enfin, les précédents modes de réalisation du contrôleur 41 peuvent être combinés pour réaliser une partie des paramètres de réglages par optimisation sur l'onde secondaire reçue, une partie des paramètres de réglages par réglage aléatoire, et une partie des paramètres de réglages par prédéfinition dans le volume V. Cette stratégie permet d'identifier encore plus de récepteurs dans le volume V.

En outre, pour qu'un élément réglable 21 puisse recevoir et décoder un paramètre de réglage qui lui est destiné, le contrôleur 41 détermine ce paramètre de réglage par exemple selon la procédure d'optimisation décrite ci-dessus pour chaque élément réglable 21 inclut dans le système de détection 10, et le contrôleur 41 transmet chaque paramètre de réglage à destination d'un élément réglable 21 dans son émission de l'onde de contrôle W_{C}.

Notamment, cette transmission dans l'onde de contrôle W_{C} est effectuée par tout type de codage et/ou tout type de modulation dans le signal d'émission de l'onde de contrôle W_{C} que le contrôleur 41 fournit à l'antenne 42.

En outre, les éléments réglables 21 comprennent avantageusement une mémoire d'élément réglable qui mémorise un identifiant d'élément réglable IDer, cet identifiant d'élément réglable étant différent pour chaque élément réglable, ce qui permet de tous les différencier.

Dans ce cas, le contrôleur 41 peut émettre dans une émission d'onde de contrôle W_{C} une information d'identification IID avec un paramètre de réglage, ce qui permet de désigner l'élément réglable 21 du système à qui est destiné ledit paramètre de réglage. Ainsi, le contrôleur 41 émet par exemple l'ensemble du jeu de paramètres (tous les paramètres de réglage) séquentiellement, chaque paramètre de réglage étant associé à une information d'identification pour que l'élément réglable 21 destinataire dudit paramètre de réglage soit le seul à appliquer ledit paramètre de réglage en question.

Le dispositif de réception 24 de l'élément réglable 21 décode alors dans l'onde de contrôle W_{C}, l'information d'identification IID et le paramètre de réglage. Ensuite, l'élément réglable 21 pilote son impédance en fonction du paramètre de réglage si l'information d'identification est égale à son identifiant d'élément réglable IDer.

Le contrôleur 41 émet éventuellement périodiquement des ondes primaires W₁ dans le volume V du contenant 20 pour détecter et identifier des récepteurs 30, et il émet périodiquement des ondes de contrôle W_{C} dans le volume V pour optimiser et régler les éléments réglables 21 fixés au contenant 20. Chaque élément réglable 21 sélectionne le paramètre de réglage qui lui est destiné.

Selon une variante des éléments réglables 21, un ou plusieurs éléments réglables 21 comprennent chacun une mémoire d'élément réglable qui mémorise un ensemble de paramètres de réglages (pré-enregistrés et/ou enregistré par transmission du contrôleur) et une période de lecture. Cet ensemble de paramètres de réglages et cette période de lecture sont connus du contrôleur 41. Cette disposition peut permettre au contrôleur 41 d'éviter d'envoyer systématiquement des nouveaux paramètres de réglage aux éléments réglables 21 ; i.e. ce qui limite le besoin de transmission. Eventuellement, cet ensemble de paramètres de réglage et/ou cette période de lecture sont différent pour chaque élément réglable 21.

Selon une première variante du contrôleur 41, le contrôleur 41 comprend dans une mémoire un tableau des identifiants des éléments réglables, ce tableau étant renseigné avec les identifiants d'éléments réglables IDer du système 10 pour pouvoir émettre l'identifiant d'élément réglable avec le paramètre de réglage.

Selon une seconde variante du contrôleur 41, le contrôleur 41 peut établir de manière dynamique le tableau des identifiants des éléments réglables. Pour ce faire, chaque élément réglable 21 émet périodiquement par une onde de retour Wᵣ, son identifiant d'élément réglable IDer. Le contrôleur 41 établit alors la liste des éléments réglables présents dans le système 10 pour renseigner ledit tableau des identifiants des éléments réglables. Notamment, un nouvel élément réglable 21 sera entré dans ce tableau après la réception de son identifiant d'élément réglable IDer. En outre, un élément réglable 21 pourra être retiré dudit tableau ou pourra être désactivé dans ledit tableau (par un drapeau d'activité) si le contrôleur 41 ne reçoit pas l'identifiant d'un élément réglable depuis une durée supérieure à une durée limite d'inactivation d'un élément réglable.

Ainsi, par ce fonctionnement dynamique, le contrôleur 41 utilisera toujours des éléments réglables 21 efficaces ou fonctionnels. Ce fonctionnement dynamique facilite aussi l'installation du système 10 qui s'adapte automatiquement aux éléments réglables 21 présents.

En outre, selon une variante, l'élément réglable 21 du type précédent, émettra périodiquement son identifiant d'élément réglable IDer uniquement en présence d'une onde primaire W₁ et/ou d'une onde de contrôle W_{C} en provenance de l'antenne 42 du contrôleur 41, notamment :
- soit parce que cet élément réglable 21 utilise un dispositif de récupération d'énergie 23 de cette onde pour son fonctionnement. En absence d'énergie, l'élément réglable 21 sera automatiquement éteint et ne diffusera pas son identifiant ;
- soit parce que cet élément réglable 21 est conçu pour ne pas émettre son identifiant s'il ne reçoit pas d'onde primaire W₁ ou d'onde de contrôle W_{C} depuis une durée supérieure à une durée de mise en veille prédéterminée.

En outre, l'élément réglable 21 peut inclure en outre un organe de stockage d'énergie adaptée pour conserver et éventuellement accumuler de l'énergie reçue par le dispositif de récupération d'énergie 23. De cette manière, l'élément réglable 21 aura plus d'autonomie et il est capable de fonctionner pendant une durée déterminée par la capacité dudit organe de stockage d'énergie. Cet organe de stockage d'énergie est par exemple une capacité électrique, ou une batterie, ou tout autre dispositif de stockage d'énergie.

Selon une troisième variante du contrôleur 41, le contrôleur 41 comprend dans une mémoire un tableau des coordonnées correspondant aux positions spatiales d'au moins une partie des éléments réglables 21 fixés sur le contenant 20, lesdites coordonnées étant enregistrées par rapport à un même repère de référence.

Le contrôleur 41 a ainsi une connaissance des positions de ces éléments réglables 21 du système 10. Le contrôleur 41 est alors apte à déterminer la position du ou des récepteurs 30 dans le volume V du contenant 20 à partir de la réception de chaque onde secondaire W₂ en provenance d'un récepteur 30, des paramètres de réglage des éléments réglables 21 et des positions spatiales des éléments réglables 21 enregistrées dans le tableau des coordonnées.

En outre, le ou les récepteurs 30 du système 10 comprennent une mémoire de récepteur qui mémorise un identifiant de récepteur IDr. Tous les récepteurs 30 ont des identifiants de récepteur différents. Un récepteur 30 émet dans une onde secondaire W₂ son identifiant de récepteur IDr en réponse d'une onde primaire W₁ qu'il reçoit en provenance de l'antenne 42.

Le récepteur 30 est par exemple un dispositif de technologie dite radio-identification ou dite RFID pour « radio frequency identification » en langue anglaise.

Le récepteur 30 est par exemple un objet connecté, par exemple de type internet des objets (IoT) ou de type à transmission par WiFi ou par Bluetooth ou par un réseau LoRA.

Eventuellement, le récepteur 30 comprend un ou plusieurs capteurs. Une ou plusieurs des valeurs mesurées par un capteur sont enregistrées dans la mémoire de récepteur ou toute autre mémoire. En réponse d'une onde primaire W₁ reçue par le récepteur 30, ce récepteur 30 est alors adapté pour émettre dans une onde secondaire W₂ son identifiant de récepteur IDr et une ou plusieurs valeurs d'un capteur.

Le ou les capteurs sont par exemple un capteur de température, un capteur d'humidité, un capteur de détection de présence, un capteur de détection d'un gaz, un capteur de débit, un capteur de tension, un capteur de courant, ou tout autre type de capteur.

Dans ce cas, les récepteurs 30 peuvent être mobiles dans le volume V ou fixés dans le volume V, c'est-à-dire de position fixe dans le volume V. Par exemple, un récepteur 30 incluant un capteur sera fixé à un dispositif dont on cherche à monitorer une grandeur mesurée par ledit capteur, ce dispositif pouvant lui-même mobile dans le volume V.

Par exemple, le système 10 peut détecter la présence et/ou identifier des produits dans un volume sur lesquels un tel récepteur est fixé, et ce système peut effectuer une surveillance de la température de ce produit. Cette application est particulièrement pertinente en alimentaire, le contenant étant alors par exemple un frigidaire ou un local réfrigéré.

Le système 10 selon l'invention, incorporant des éléments réglables 21 pilotables et autonomes est alors un système de détection et/ou identification des récepteurs 30 très efficace car il est capable d'optimiser la réception de l'onde primaire W₁ sur des récepteurs 30 grâce aux retours desdits récepteurs 30 par leur onde secondaire W₂ qui permet au contrôleur 41 de déterminer des paramètres de réglages transmis aux éléments réglables 21 par l'onde de contrôle W_{C}.

Ce système 10 est également très simple à mettre en œuvre car les éléments réglables 21 sont autonomes : ces éléments réglables 21 n'ont pas besoin d'être câblés par une liaison filaire au contrôleur 41 car ils récupèrent de l'énergie par l'onde primaire W₁ reçue et/ou par l'onde de contrôle W_{C} et car ils reçoivent leur paramètre de réglage par un codage dans ladite onde de contrôle W_{C}.

Ce système 10 a de nombreuses applications industrielles.

Par exemple, le contenant 20 peut être :
- un mobilier équipé d'éléments réglables 21, tel qu'un mobilier de rangement et adapté à recevoir des produits, comme une armoire, un meuble étagère, chaque produit ayant un récepteur attaché à celui-ci, ou tel qu'un mobilier de bureau comme un bureau, un tableau; ou
- un récipient de caisse enregistreuse d'un magasin équipé d'éléments réglables 21, dans lequel des produits sont insérés. Le système sera capable d'identifier les produits par les récepteurs attachés à ces produits, et la caisse pourra établir une facture ; ou
- un chariot de course d'un magasin équipé d'éléments réglables 21 ; ou
- un sac équipé d'éléments réglables 21, par exemple un sac de course ; ou
- un véhicule automobile ou un avion ou un train équipé d'éléments réglables 21 ; ou
- un local équipé d'éléments réglables 21, par exemple un local industriel tel qu'un entrepôt, ou un local d'habitation, ou un local d'un centre commercial.

Ces contenants 20 comprennent une ouverture (tel que la face d'ouverture 20₆ de la figure 1) qui est adaptée pour introduire et/ou extraire un récepteur du volume V du contenant 20. Cette ouverture 20 peut être équipée d'une porte mobile pour la refermer temporairement.

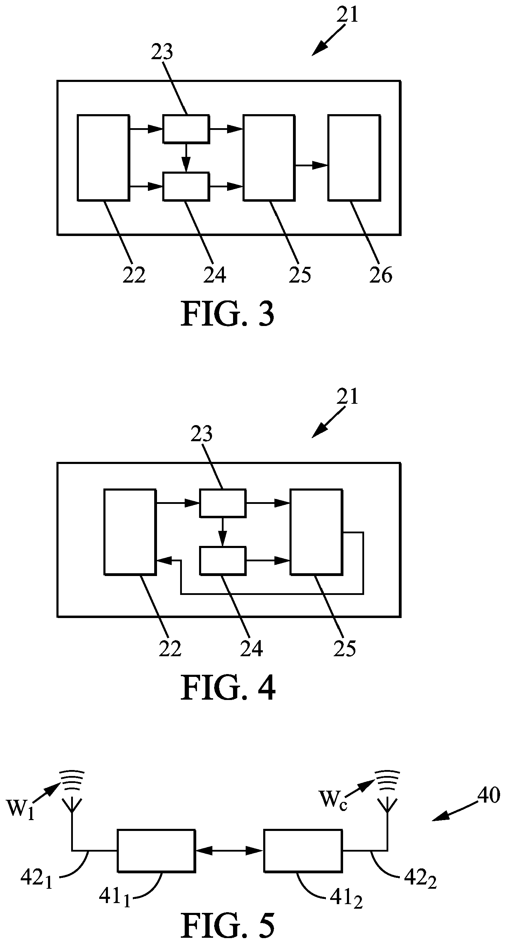

La **figure 3** montre une première variante d'un élément réglable 21 utilisé dans le système de détection 10 selon l'invention.

Cet élément réglable 21 comprend :
- une première antenne 22 adaptée pour recevoir l'onde primaire W₁ et/ou l'onde de contrôle W_{C} et pour fournir un signal au dispositif de récupération d'énergie 23 et au dispositif de réception 24,
- une seconde antenne 26 ayant une impédance qui peut être modifiée pour modifier la manière dont l'onde primaire W₁ est réfléchie et/ou transmise dans le volume V,
- un circuit électronique 25 alimenté par le dispositif de récupération d'énergie, et qui pilote l'impédance de la seconde antenne 26.

Dans cet élément réglable 21, le dispositif de récupération d'énergie 23 accumule de l'énergie par le signal reçu par la première antenne 22, par tout type de moyen tel que décrit ci-dessus, et alimente le dispositif de réception 24 et le circuit électronique 25.

Le dispositif de réception 24 de l'onde de contrôle W_{C} décode un paramètre de réglage contenu dans cette onde. Le circuit électronique 25 alimenté par le dispositif de récupération d'énergie 23 utilise alors le paramètre de réglage pour piloter et modifier l'impédance de la seconde antenne 26.

La **figure 4** montre une seconde variante d'un élément réglable 21 utilisé dans le système de détection 10 selon l'invention. Cet élément réglable ne comprend qu'une seule antenne commune pour la réception de l'onde de contrôle W_{C} et pour l'adaptation d'impédance qui modifie la manière dont l'onde primaire W₁ est réfléchie et/ou transmise par ladite antenne.

Ainsi, comme représenté sur la figure, cet élément réglable 21 comprend :
- une première antenne 22 adaptée pour recevoir l'onde de contrôle W_{C} et pour fournir un signal au dispositif de récupération d'énergie 23 et au dispositif de réception 24, ladite première antenne 22 ayant une impédance qui peut être modifiée pour modifier la manière dont l'onde primaire W₁ est réfléchie et/ou transmise, et
- un circuit électronique 25 alimenté par le dispositif de récupération d'énergie, et qui pilote l'impédance de la première antenne 22.

En revenant à la **figure 1****,** le contrôleur 41 et l'antenne 42 forment un ensemble, un premier mode de réalisation d'un système de contrôle 40. Ce système de contrôle 40 :
- émet l'onde primaire W₁ à destination des récepteurs 30 et reçoit l'onde secondaire W₂ en retour des récepteurs 30 détectés, pour détecter et/ou identifier le ou les récepteurs 30 ; et
- émet des ondes de contrôle W_{C} à destination des éléments réglables 21 et reçoit une onde de retour Wᵣ pour chaque élément réglable 21 ayant reçu son paramètre de réglage dans l'onde de contrôle précédente, cette onde de retour Wᵣ correspondant ainsi à une confirmation de la modification d'impédance effectuée par ledit élément réglable 21, pour optimiser la détection des récepteurs 30 dans le volume V.

Dans ce mode de réalisation, la détection des récepteurs 30 et l'adaptation des éléments réglables 21 sont effectuées par un unique contrôleur 41.

La **figure 5** représente un second mode de réalisation du système de contrôle 40 constitué d'au moins deux sous-systèmes.

Ce système de contrôle 40 comprend ainsi :
- un premier sous-système comprenant un contrôleur de récepteur 41₁ et une antenne de récepteur 42₁, l'antenne de récepteur étant adaptée pour au moins émettre l'onde primaire W₁ et recevoir l'onde secondaire W₁ pour détecter et/ou identifier le ou les récepteurs 30 ; et
- un deuxième sous-système comprenant un contrôleur d'éléments réglables 41₂ et une antenne d'élément réglable 42₂, l'antenne d'élément réglable étant adaptée pour émettre une onde de contrôle W_{C} à destination des éléments réglables 21 et pour recevoir une onde de retour Wᵣ pour chaque élément réglable 21 ayant reçu son paramètre de réglage dans l'onde de contrôle précédente.

Dans ce mode de réalisation, la détection des récepteurs 30 est effectuée par le contrôleur de récepteur 41₁ et l'optimisation des éléments réglables 21 est effectuée par le contrôleur d'éléments réglables 41₂. Cependant, le contrôleur de récepteur 41₁ transmet éventuellement des informations au contrôleur d'éléments réglables 41₂ par une connexion filaire ou non filaire pour déterminer les paramètres de réglages comme cela est décrit ci-dessus.

D'autres répartitions des fonctions du système de détection 10 sont envisageables.

Enfin, le principe des éléments réglables autonomes en énergie et contrôlés indépendamment les uns des autres par une transmission sans fil pour chacun d'eux peux également être utilisée pour des dispositifs de mise en forme d'ondes telles que décrites dans le document de brevet n° WO 2015/039769, dispositif de mise en forme d'onde indépendant d'une source et indépendant de dispositifs mobiles et qui permet d'améliorer pour les dispositifs mobiles, la réception de l'onde primaire de la source.

## Revendications

1. **Système de détection de récepteurs** comprenant :
- au moins un récepteur (30),
- un contenant (20) ayant un volume, le contenant étant adapté pour contenir dans son volume le récepteur,
- une antenne (42) adaptée pour émettre une onde primaire (W₁) dans le volume, et pour recevoir une onde secondaire (W₂) émise par le récepteur dans le volume en réponse de la réception de l'onde primaire,
- un contrôleur (41) relié à l'antenne, le contrôleur étant adapté pour commander l'émission de l'onde primaire et pour détecter le récepteur par l'onde secondaire reçue, **caractérisé en ce que** le système comprend en outre des éléments réglables (21) ayant une impédance qui peut être modifiée pour modifier la manière dont l'onde primaire est réfléchie et/ou transmise par l'élément réglable, les éléments réglables étant en nombre N supérieur ou égal à deux, et
dans lequel :
- les éléments réglables sont pilotés par une onde de contrôle (W_{C}) émise par le contrôleur,
- les éléments réglables sont fixés au contenant en une pluralité de positions différentes,
- des éléments réglables comprennent un dispositif de récupération d'énergie (23) de l'onde primaire et/ou de l'onde de contrôle pour les alimenter en énergie, et
- chaque élément réglable comprend un dispositif de réception (24) de l'onde de contrôle qui décode un paramètre de réglage contenu dans ladite onde de contrôle , ledit paramètre de réglage étant destiné à l'élément réglable pour que l'élément réglable pilote son impédance.

2. Le système selon la revendication 1, dans lequel le nombre N d'éléments réglables (21) est supérieur à cinq.

3. Le système selon l'une des revendications 1 à 2, dans lequel le contrôleur (41) détermine un paramètre de réglage adapté pour chaque élément réglable et transmet chaque paramètre de réglage à destination d'un élément réglable dans l'onde de contrôle.

4. Le système selon l'une des revendications 1 à 3, dans lequel chaque élément réglable comprend une mémoire d'élément réglable qui mémorise un identifiant d'élément réglable (IDer), les identifiants d'éléments réglables étant différents pour tous les éléments réglables.

5. Le système selon la revendication 4, dans lequel :
- le contrôleur (41) transmet une information d'identification avec le paramètre de réglage à destination d'un élément réglable, ladite information d'identification désignant l'élément réglable du système à qui est destiné le paramètre de réglage, et
- le dispositif de réception (24) de l'élément réglable décode l'information d'identification et le paramètre de réglage contenus dans l'onde de contrôle, et l'élément réglable (21) pilote son impédance par rapport au paramètre de réglage si l'information d'identification est égale à son identifiant d'élément réglable (IDer).

6. Le système selon l'une des revendications 4 à 5, dans lequel chaque élément réglable (21) en présence de l'onde primaire émet périodiquement par une onde de contrôle son identifiant d'élément réglable pour que le contrôleur (41) établisse une liste des éléments réglables présents.

7. Le système selon l'une des revendications 1 à 6, dans lequel chaque élément réglable comprend en outre un organe de stockage de l'énergie récupérée par le dispositif de récupération d'énergie.

8. Le système selon l'une des revendications 1 à 7, comprenant en outre un élément non réglable (27) ayant une impédance déterminée pour modifier la manière dont l'onde primaire est réfléchie et/ou absorbée par ledit élément non réglable.

9. Le système selon l'une des revendications 1 à 8, dans lequel les éléments réglables (21) sont des dispositifs de forme plane, avec une portion de circuit directement imprimée sur un support plan.

10. Le système selon l'une des revendications 1 à 9, dans lequel chaque récepteur (30) comprend une mémoire de récepteur qui mémorise un identifiant de récepteur (IDr), les identifiants de récepteur étant différents pour tous les récepteurs, et chaque récepteur émet par l'onde secondaire ledit identifiant de récepteur.

11. Le système selon l'une des revendications 1 à 10, dans lequel le récepteur est un dispositif de technologie RFID, l'antenne étant alors une antenne de détection adaptée à ce type de récepteur.

12. Le système selon l'une des revendications 1 à 11, dans lequel l'onde de contrôle est l'onde primaire.

13. Le système selon l'une des revendications 1 à 12, dans lequel le contrôleur (41) et l'antenne (42) sont constitués d'au moins deux sous-systèmes :
- un premier sous-système comprenant un contrôleur de récepteur (41₁) et une antenne de récepteur (42₁), l'antenne de récepteur étant adaptée pour au moins émettre l'onde primaire et recevoir l'onde secondaire,
- un deuxième sous-système comprenant un contrôleur d'éléments réglables (41₂) et une antenne d'élément réglable (42₂), l'antenne d'élément réglable étant adaptée pour émettre et recevoir une onde de contrôle.

14. Le système selon l'une des revendications 1 à 13, dans lequel le contrôleur (41) comprend un tableau de coordonnées correspondant aux positions spatiales d'au moins une partie des éléments réglables (21) par rapport à un repère de référence.

15. Le système selon la revendication 14, dans lequel le contrôleur (41) détermine la position de chaque récepteur à partir de la réception de chaque onde secondaire, des paramètres de réglage des éléments réglables et des positions spatiales des éléments réglables enregistrées dans le tableau de coordonnées.

16. Le système selon l'une des revendications 1 à 15, dans lequel le contenant comprend une ouverture adaptée pour introduire et/ou extraire un récepteur du volume dudit contenant, l'ouverture pouvant éventuellement être refermée par une porte mobile.

17. Le système selon la revendication 16, dans lequel le contenant est compris dans une liste de contenant comprenant un mobilier, un récipient de caisse enregistreuse, un sac, un véhicule automobile, un avion, un train, un local.

18. Le système selon l'une des revendications 1 à 17, dans lequel chaque élément réglable (21) comprend :
- une première antenne (22) adaptée pour recevoir l'onde primaire et pour fournir un signal au dispositif de récupération d'énergie (23) et au dispositif de réception (24), ladite première antenne ayant une impédance qui peut être modifiée pour modifier la manière dont l'onde primaire est réfléchie et/ou transmise,
- un circuit électronique (25) alimenté par le dispositif de récupération d'énergie, et qui pilote l'impédance de la première antenne (22).

19. Le système selon l'une des revendications 1 à 17, dans lequel chaque élément réglable (21) comprend :
- une première antenne (22) adaptée pour recevoir l'onde primaire et pour fournir un signal au dispositif de récupération d'énergie (23) et au dispositif de réception (24),
- une seconde antenne (26) ayant une impédance qui peut être modifiée pour modifier la manière dont l'onde primaire est réfléchie et/ou transmise,
- un circuit électronique (25) alimenté par le dispositif de récupération d'énergie, et qui pilote l'impédance de la seconde antenne.

## Patentansprüche

1. **System zur Erfassung von Empfängern,** umfassend:
- wenigstens einen Empfänger (30),
- einen Behälter (20) mit einem Volumen, wobei der Behälter dazu ausgebildet ist, in seinem Volumen den Empfänger zu umfassen,
- eine Antenne (42), die dazu ausgebildet ist, eine Primärwelle (W₁) in das Volumen zu senden und eine Sekundärwelle (W₂) zu empfangen, die von dem Empfänger in dem Volumen als Reaktion auf den Empfang der Primärwelle gesendet wird,
- einen mit der Antenne verbundenen Controller (41), wobei der Controller dazu ausgebildet ist, das Senden der Primärwelle zu steuern und den Empfänger mittels der empfangenen Sekundärwelle zu erfassen,
**dadurch gekennzeichnet, dass** das System ferner regelbare Elemente (21) mit einer Impedanz umfasst, die modifiziert werden kann, um die Art und Weise zu ändern, in der die Primärwelle von dem regelbaren Element reflektiert und/oder übertragen wird, wobei die regelbaren Elemente in einer Anzahl N größer oder gleich zwei vorhanden sind, und
wobei:
- die regelbaren Elemente durch eine vom Controller gesendete Steuerwelle (W_{c}) gesteuert werden,
- die regelbaren Elemente in einer Mehrzahl von verschiedenen Positionen am Behälter befestigt sind,
- regelbare Elemente eine Vorrichtung (23) zur Rückgewinnung von Energie aus der Primärwelle und/oder der Steuerwelle umfassen, um diese mit Energie zu versorgen, und
- jedes regelbare Element eine Empfangsvorrichtung (24) für die Steuerwelle umfasst, die einen in der Steuerwelle enthaltenen Einstellparameter decodiert, wobei der Einstellparameter für das regelbare Element bestimmt ist, damit das regelbare Element seine Impedanz steuert.

2. System nach Anspruch 1, wobei die Anzahl N der regelbaren Elemente (21) größer als fünf ist.

3. System nach einem der Ansprüche 1 oder 2, wobei der Controller (41) für jedes regelbare Element einen passenden Einstellparameter bestimmt und jeden Einstellparameter an ein regelbares Element in der Steuerwelle überträgt.

4. System nach einem der Ansprüche 1 bis 3, wobei jedes regelbare Element einen Speicher für das regelbare Element umfasst, der eine Kennung für das regelbare Element (IDer) speichert, wobei die Kennungen für regelbare Elemente für alle regelbaren Elemente unterschiedlich sind.

5. System nach Anspruch 4, wobei:
- der Controller (41) eine Identifikationsinformation mit dem Einstellparameter an ein regelbares Element überträgt, wobei die Identifikationsinformation das regelbare Element desjenigen Systems bezeichnet, an das der Einstellparameter gerichtet ist, und
- die Empfangsvorrichtung (24) des regelbaren Elements die in der Steuerwelle enthaltene Identifikationsinformation und den Einstellparameter decodiert, und das regelbare Element (21) seine Impedanz in Bezug auf den Einstellparameter steuert, wenn die Identifikationsinformation gleich seiner Kennung für das regelbare Element (IDer) ist.

6. System nach einem der Ansprüche 4 bis 5, wobei jedes regelbare Element (21) in Gegenwart der Primärwelle periodisch durch eine Steuerwelle seine Kennung für das regelbare Element sendet, damit der Controller (41) eine Liste der vorhandenen regelbaren Elemente erstellt.

7. System nach einem der Ansprüche 1 bis 6, wobei jedes regelbare Element ferner ein Speicherorgan für die von der Energierückgewinnungsvorrichtung zurückgewonnene Energie umfasst.

8. System nach einem der Ansprüche 1 bis 7, welches ferner ein nicht regelbares Element (27) mit einer Impedanz umfasst, die dazu bestimmt ist, die Art und Weise zu verändern, in der die Primärwelle von dem nicht regelbaren Element reflektiert und/oder absorbiert wird.

9. System nach einem der Ansprüche 1 bis 8, wobei die regelbaren Elemente (21) planar geformte Vorrichtungen sind, bei denen ein Teil der Schaltung direkt auf ein planares Medium gedruckt ist.

10. System nach einem der Ansprüche 1 bis 9, wobei jeder Empfänger (30) einen Empfängerspeicher umfasst, der eine Empfängerkennung (IDr) speichert, wobei die Empfängerkennungen für alle Empfänger unterschiedlich sind, und jeder Empfänger durch die Sekundärwelle die genannte Empfängerkennung sendet.

11. System nach einem der Ansprüche 1 bis 10, wobei der Empfänger ein RFID-Technologiegerät ist und die Antenne dann eine für diese Art von Empfänger geeignete Detektionsantenne ist.

12. System nach einem der Ansprüche 1 bis 11, wobei die Steuerwelle die Primärwelle ist.

13. System nach einem der Ansprüche 1 bis 12, wobei der Controller (41) und die Antenne (42) aus wenigstens zwei Subsystemen bestehen:
- ein erstes Subsystem, das einen Empfängercontroller (41₁) und eine Empfängerantenne (42₁) umfasst, wobei die Empfängerantenne dazu ausgebildet ist, wenigstens die Primärwelle zu senden und die Sekundärwelle zu empfangen,
- ein zweites Subsystem, das einen Controller für regelbare Elemente (41₂) und eine Antenne für regelbare Elemente (42₂) umfasst, wobei die Antenne für regelbare Elemente dazu ausgebildet ist, eine Steuerwelle zu senden und zu empfangen.

14. System nach einem der Ansprüche 1 bis 13, wobei der Controller (41) eine Koordinatentabelle umfasst, die den räumlichen Positionen von wenigstens einem Teil der regelbaren Elemente (21) in Bezug auf eine Referenzmarkierung entspricht.

15. System nach Anspruch 14, wobei der Controller (41) die Position jedes Empfängers basierend auf dem Empfang jeder Sekundärwelle, den Einstellparametern der regelbaren Elemente und den in der Koordinatentabelle gespeicherten räumlichen Positionen der regelbaren Elemente bestimmt.

16. System nach einem der Ansprüche 1 bis 15, wobei der Behälter eine Öffnung aufweist, die zum Einführen und/oder Herausnehmen eines Empfängers aus dem Volumen des Behälters ausgebildet ist, wobei die Öffnung gegebenenfalls durch eine bewegliche Tür geschlossen werden kann.

17. System nach Anspruch 16, wobei der Behälter in einer Liste von Behältern enthalten ist, die ein Möbelstück, einen Registrierkassenbehälter, eine Tasche, ein Kraftfahrzeug, ein Flugzeug, einen Zug, einen Raum umfasst.

18. System nach einem der Ansprüche 1 bis 17, wobei jedes regelbare Element (21) umfasst:
- eine erste Antenne (22), die dazu ausgebildet ist, die Primärwelle zu empfangen und ein Signal an die Energierückgewinnungsvorrichtung (23) und die Empfangsvorrichtung (24) vorzusehen, wobei die erste Antenne eine Impedanz aufweist, die modifiziert werden kann, um die Art und Weise zu verändern, in der die Primärwelle reflektiert und/oder übertragen wird,
- eine elektronische Schaltung (25), die von der Energierückgewinnungsvorrichtung gespeist wird und die die Impedanz der ersten Antenne (22) steuert.

19. System nach einem der Ansprüche 1 bis 17, wobei jedes regelbare Element (21) umfasst:
- eine erste Antenne (22), die dazu ausgebildet ist, die Primärwelle zu empfangen und ein Signal an die Energierückgewinnungsvorrichtung (23) und die Empfangsvorrichtung (24) vorzusehen,
- eine zweite Antenne (26) mit einer Impedanz, die modifiziert werden kann, um die Art und Weise, in der die Primärwelle reflektiert und/oder gesendet wird, zu verändern,
- eine elektronische Schaltung (25), die von der Energierückgewinnungsvorrichtung gespeist wird und die die Impedanz der zweiten Antenne steuert.

## Claims

1. **System for detecting receivers,** comprising:
- at least one receiver (30),
- a container (20) having a volume, the container being suitable for containing the receiver within its volume,
- an antenna (42) suitable for emitting a primary wave (W₁) in the volume, and for receiving a secondary wave (W₂) emitted by the receiver in the volume in response to reception of the primary wave,
- a controller (41) connected to the antenna, the controller being suitable for controlling the emission of the primary wave and for detecting the receiver via the received secondary wave,
**characterized in that** the system further comprises adjustable elements (21) having an impedance which can be modified in order to change the manner in which the primary wave is reflected and/or transmitted by the adjustable element, the number N of adjustable elements being greater than or equal to two, and
wherein:
- the adjustable elements are controlled by a control wave (W_{c}) emitted by the controller,
- the adjustable elements are attached to the container at a plurality of different positions,
- some adjustable elements comprise an energy recovery device (23) for recovering energy from the primary wave and/or from the control wave in order to power themselves, and
- each adjustable element comprises a control wave reception device (24) which decodes an adjustment parameter contained in said control wave, said adjustment parameter being intended for the adjustable element so that the adjustable element controls its impedance.

2. System according to claim 1, wherein the number N of adjustable elements (21) is greater than five.

3. System according to one of claims 1 to 2, wherein the controller (41) determines a suitable adjustment parameter for each adjustable element and transmits each adjustment parameter to an adjustable element within the control wave.

4. System according to one of claims 1 to 3, wherein each adjustable element comprises an adjustable element memory which stores an adjustable element identifier (IDer), the adjustable element identifiers being different for all adjustable elements.

5. System according to claim 4, wherein:
- the controller (41) transmits identification information with the adjustment parameter intended for an adjustable element, said identification information designating the adjustable element of the system for which the adjustment parameter is intended, and
- the reception device (24) of the adjustable element decodes the identification information and the adjustment parameter contained in the control wave, and the adjustable element (21) controls its impedance according to the adjustment parameter if the identification information is equal to its adjustable element identifier (IDer).

6. System according to one of claims 4 to 5, wherein each adjustable element (21) in the presence of the primary wave periodically emits its adjustable element identifier, via a control wave, so that the controller (41) can establish a list of the adjustable elements present.

7. System according to one of claims 1 to 6, wherein each adjustable element further comprises a storage member for the energy recovered by the energy recovery device.

8. System according to one of claims 1 to 7, further comprising a non-adjustable element (27) having a defined impedance in order to modify the manner in which the primary wave is reflected and/or absorbed by said non-adjustable element.

9. System according to one of claims 1 to 8, wherein the adjustable elements (21) are devices of planar shape, with a circuit portion directly printed on a planar substrate.

10. System according to one of claims 1 to 9, wherein each receiver (30) comprises a receiver memory which stores a receiver identifier (IDr), the receiver identifiers being different for all the receivers, and each receiver emits said receiver identifier via the secondary wave.

11. System according to one of claims 1 to 10, wherein the receiver is a device of RFID technology, the antenna then being a detection antenna suitable for this type of receiver.

12. System according to one of claims 1 to 11, wherein the control wave is the primary wave.

13. System according to one of claims 1 to 12, wherein the controller (41) and the antenna (42) are composed of at least two subsystems:
- a first subsystem comprising a receiver controller (41₁) and a receiver antenna (42₁), the receiver antenna being suitable at least for emitting the primary wave and receiving the secondary wave,
- a second subsystem comprising an adjustable element controller (41₂) and an adjustable element antenna (42₂), the adjustable element antenna being suitable for emitting and receiving a control wave.

14. System according to one of claims 1 to 13, wherein the controller (41) comprises a table of coordinates corresponding to the spatial positions of at least part of the adjustable elements (21) according to a frame of reference.

15. System according to claim 14, wherein the controller (41) determines the position of each receiver based on: the reception of each secondary wave, adjustment parameters of the adjustable elements, and spatial positions of the adjustable elements stored in the table of coordinates.

16. System according to one of claims 1 to 15, wherein the container comprises an opening suitable for inserting and/or extracting a receiver into/from the volume of said container, the opening possibly being closed by a movable door.

17. System according to claim 16, wherein the container is comprised in a list of containers comprising a furniture item, a receptacle of a cash register, a bag, a motor vehicle, an airplane, a train, a location.

18. System according to one of claims 1 to 17, wherein each adjustable element (21) comprises:
- a first antenna (22) suitable for receiving the primary wave and for supplying a signal to the energy recovery device (23) and to the reception device (24), said first antenna having an impedance which can be modified in order to change the manner in which the primary wave is reflected and/or transmitted,
- an electronic circuit (25) powered by the energy recovery device, and which controls the impedance of the first antenna (22).

19. System according to one of claims 1 to 17, wherein each adjustable element (21) comprises:
- a first antenna (22) suitable for receiving the primary wave and for supplying a signal to the energy recovery device (23) and to the reception device (24),
- a second antenna (26) having an impedance which can be modified in order to change the manner in which the primary wave is reflected and/or transmitted,
- an electronic circuit (25) powered by the energy recovery device, and which controls the impedance of the second antenna.
